# EUROPEAN PATENT APPLICATION

(11) **EP 4 552 887 A1**
(43) Date of publication of application: **14.05.2025**
(21) Application number: 23209259.3
(22) Date of filing: 10.11.2023
(51) Int. Cl.: B60K 7/00, B66F 9/06, B60K 17/04, B65G 1/04, B65G 1/06, B66F 9/075, B60B 27/00, B60B 33/00

(54) **A WHEEL ASSEMBLY**

(71) Applicant: AUTOSTORE TECHNOLOGY AS, 5578 Nedre Vats (NO)
(72) Inventor: NURZYNSKI, Daniel, 5578 Nedre Vats (NO)
(74) Representative: Jarrett, Daniel Phillip

(57) **Abstract**

The invention relates to a wheel assembly (550',550") for a container handling vehicle (501), the wheel assembly (550',550") comprising:
- a wheel (510',510") and a gear wheel (511',511"),
- the wheel (510',510") being rotatable around a wheel axis (WA) and comprising a toothed circular surface arranged radially inwards of a wheel rim of the wheel (510',510"),
- the gear wheel (511',511") being rotatable around a gear wheel axis (GA) and engaged to the toothed circular surface (512) of the wheel (510',510") via a toothed outer surface (519',519");
wherein the wheel axis (WA) and the gear wheel axis (GA) are arranged parallel and offset relative to each other.

## Description

The present invention relates to the technical field of automated storage and retrieval systems (ASRS) and in particular to ASRS's with container handling vehicles operating on top of a rail system. Storage containers are stacked one on top of another below the rail system and the container handling vehicles lift the storage containers from above.

### BACKGROUND AND PRIOR ART

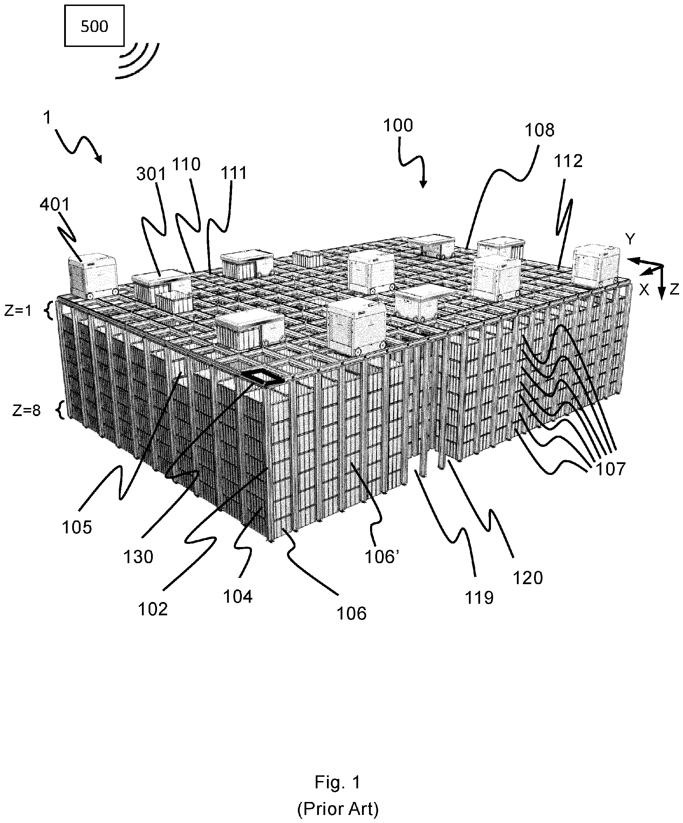

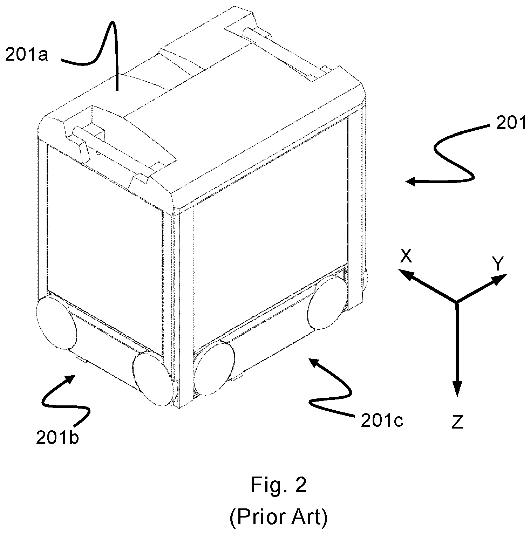

Fig. 1 discloses a prior art automated storage and retrieval system 1 with a frame structure 100 and Figs. 2, 3A-3C and 4 disclose three different prior art container handling vehicles 201,301,401 suitable for operating on such a system 1.

The frame structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The frame structure 100 of the automated storage and retrieval system 1 comprises a rail system 108 arranged across the top of frame structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of parallel rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the frame structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3A and 4 two wheels in each set are fully visible. The first set of wheels 201b,301b,401b is arranged to engage with two adjacent rails of the first set of parallel rails 110, and the second set of wheels 201c,301c,401c is arranged to engage with two adjacent rails of the second set of parallel rails 111. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of parallel rails 110, 111 at any one time.

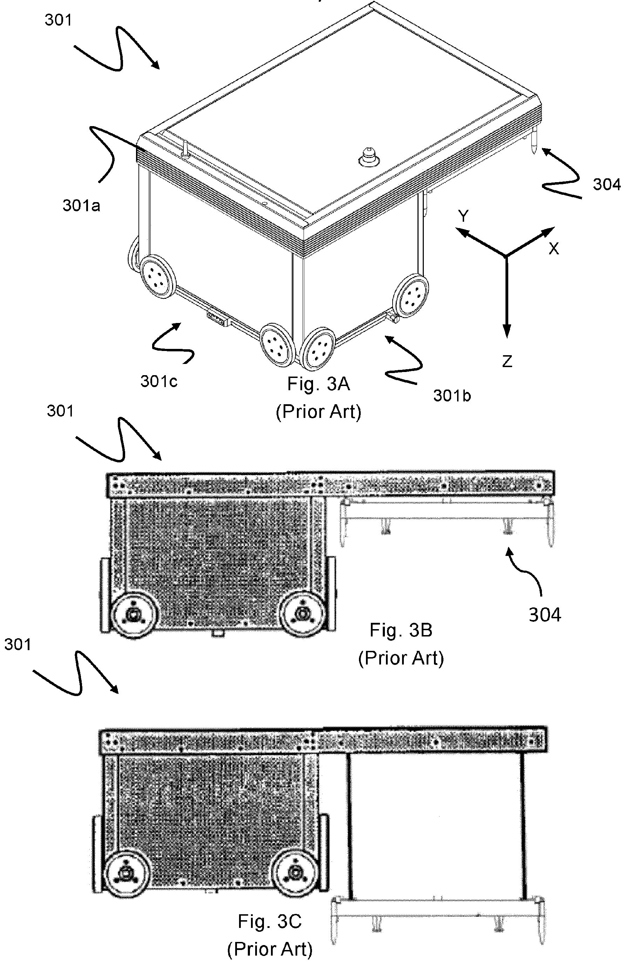

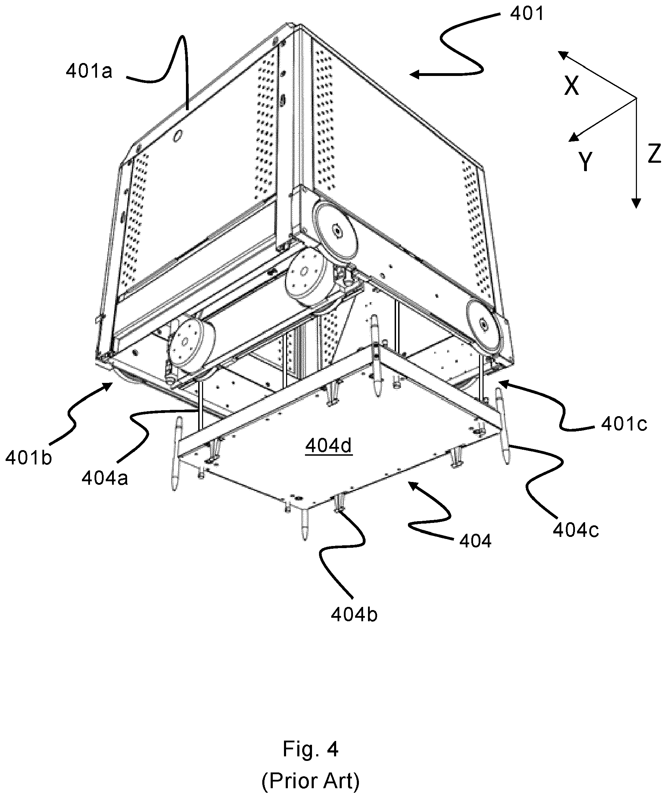

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3A-3C and 4 indicated with reference number 304,404. The gripping device of the container handling device 201 is located within the vehicle body 201a in Fig. 2 and is thus not shown. The lifting device may comprise a lifting frame 404d suspended from lifting bands 404a. The lifting bands 404a may provide power and communication between the container handling vehicle and the lifting frame 404d. The lifting frame 404d may comprise gripping engaging devices/grippers 404b for connection to gripping recesses of a storage container 106. Guide pins 404c assist in aligning the grippers 404b relative the gripping recesses of the storage container 106.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the frame structure 100 has often been referred to as a grid 104, where the possible storage positions within this grid are referred to as storage cells. Each storage column may be identified by a position in an *X*- and *Y*-direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the frame structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the frame structure 100 or transferred out of or into the frame structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the frame structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the frame structure 100 again once accessed. A port can also be used for transferring storage containers to another storage facility (e.g. to another frame structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different frame structures, e.g. as is described in WO2014/075937A1, the contents of which are incorporated herein by reference.

A storage system may also use port columns 119,120 to transfer a storage container between the rail system 108 on top of the frame structure 100 and a container transfer vehicle arranged below a lower end of the port column. Such storage systems and suitable container transfer vehicles are disclosed in WO 2019/238694 A1 and WO 2019/238697 A1, the contents of which are incorporated herein by reference.

A potential disadvantage of using a container transfer vehicle to retrieve and deliver storage containers from/to the lower end of a port column is the time dependency between the container transfer vehicle(s) and the container handling vehicles used to retrieve/deliver the storage containers through the port column.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the frame structure 100, the content of each storage container 106; and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

### SUMMARY OF THE INVENTION

The present invention is set forth and characterized in the independent claims, while the dependent claims describe other characteristics of the invention.

The present invention relates to a container handling vehicle for operation on a rail system of a storage and retrieval system, wherein the container handling vehicle comprises:
- a vehicle body;
- at least one set of wheels connected to the vehicle body, the at least one set of wheels being configured for driving the container handling vehicle in a first direction on top of the rail system;
- the at least one set of wheels comprising a first wheel and a second wheel, the first wheel and the second wheel being arranged on opposite sides of the vehicle body and rotatable around a common wheel axis;
- the first wheel comprises a toothed circular surface arranged radially inwards of a wheel rim of the first wheel;
- a first gear wheel engaging the toothed circular surface of the first wheel,
   wherein the first gear wheel is rotatable around a gear wheel axis;
   wherein the wheel axis and the gear wheel axis are arranged parallel and offset relative to each other.

The first wheel and the first gear wheel form part of a first wheel assembly.

The first gear wheel is thus also arranged radially inwards of the rim of the first wheel. Radially inwards of the wheel rim is a position inside the wheel circumference and inside a width of the wheel.

The arrangement of the first gear wheel and the toothed surface of the first wheel can be seen as a planetary gear system.

The second wheel may comprise a toothed circular surface arranged radially inwards of a wheel rim of the second wheel; and a second gear wheel may engage the second wheel, wherein the second gear wheel may be rotatable around the gear wheel axis.

The toothed surface may be an inner circumferential surface of the first wheel.

Thus, an inner circumferential surface of the first wheel may have a toothed surface complementary shape for engagement with a toothed outer surface of the first gear wheel.

Similarly, the second wheel may comprise an inner circumferential surface for interaction with a toothed outer surface of the second gear wheel.

The toothed surface may be an outer circumferential surface of a sprocket wheel arranged around the wheel axis. Thus, the sprocket wheel may be concentrically arranged around the wheel axis such that the sprocket wheel rotates around the same wheel axis as the first wheel.

A similar arrangement may be provided for the second wheel and second gear wheel.

The container handling vehicle may comprise:
- a first wheel motor and a first drive belt, wherein the first drive belt may be configured to drive the first gear wheel by rotation of the first wheel motor.

The first gear wheel may be connected to one end of an axle which is arranged radially inwards of the wheel rim of the first wheel and a second end of the axle may extend to an outside of the wheel rim of the first wheel forming a pulley for engagement with the first drive belt.

Similarly, if a second gear wheel is present, the second gear wheel may be connected to one end of an axle which is arranged radially inwards of the wheel rim of the second wheel and a second end of the axle may extend to an outside of the wheel rim of the second wheel forming a pulley for engagement with the second drive belt.

This arrangement of drive belt, the first gear wheel and the toothed surface of the first wheel can be seen as a belt-driven planetary gear system.

The container handling vehicle may comprise:
- a second wheel motor and a second drive belt, wherein the second drive belt may be configured to drive the second gear wheel by rotation of the second wheel motor.

Alternatively, the first motor may drive both the first wheel and the second wheel by using an axle linking the first drive belt and a second drive belt configured to drive the second gear wheel.

The first wheel motor and the second wheel motor may have a common motor rotational axis, and the motor rotational axis may be arranged parallel and offset relative to the wheel axis and the gear wheel axis.

Since the available space at the wheel axis and the gear wheel axis may be limited, arranging the motor wheel axis somewhere else, e.g. at a location with more available space, may render use of a larger motor possible.

The motor rotational axis may be arranged inside the vehicle body.

By arranging the motor this way renders possible using larger motors since there is available space inside the vehicle body.

The container handling vehicle may comprise:
- a first bracket which extends outwardly from a side of the vehicle body in the first direction, for supporting the first wheel in a position where the wheel axis may be spaced from the vehicle body, and
- a second bracket which extends outwardly from an opposite side of the vehicle body in the first direction, for supporting the second wheel in a position where the wheel axis may be spaced from the vehicle body.

The first and second brackets may be connected to the body of the container handling vehicle using fastening means such as screw, bolt, pin, glue, welding, rivet, soldering etc.

The container handling vehicle may comprise a cantilever portion.

The first and second brackets may be arranged substantially within a vertical projection of the cantilever portion.

The container handling vehicle may comprise a lifting device which comprises a lifting frame for lifting storage containers suspended from the cantilever portion.

The lifting device is configured for vertical transportation of storage containers, e.g. raising a storage container from, and lowering a storage container into, a storage column. The lifting frame may be suspended via lifting bands. The lifting bands may provide power and communication between the container handling vehicle and the lifting frame.

The lifting device may comprise one or more grippers which may be adapted to engage a storage container.

The lifting frame and grippers can be lowered from the vehicle so that the position of the grippers with respect to the cantilever portion of the vehicle can be adjusted in a third direction Z which is orthogonal to the first direction X and the second direction Y. The grippers preferably engage the storage containers from above.

Preferably guide pins or guide members assist in aligning the grippers relative the gripping recesses of the storage container as well as in aligning the lifting frame relative upright members of the frame structure.

The automated storage and retrieval system may comprise a storage grid with a rail system, the rail system may comprise a first set of parallel rails arranged to guide movement of vehicles in the first direction, and a second set of parallel rails arranged perpendicular to the first set of rails to guide movement of the vehicles in a second direction which may be perpendicular to the first direction, the first and second sets of parallel rails forming a grid which divides the rail system into a plurality of grid cells; and wherein the container handling vehicle operates on the rail system, wherein the first and second wheels may extend from opposite sides of the vehicle body into a neighboring grid cell.

The rail system may be arranged on top of upright members. The first and second set of rails providing a horizontal grid-based rail system defining a plurality of grid cells. The rails of the rail system may comprise one or two tracks. Preferably both directions of rail comprise two tracks, e.g., either as two parallel channels formed in a rail, or as a channel provided in each of a pair of rail members that have been fastened to the other to form a rail. In such arrangements the grid opening and a track-width on each side defines the "grid cell". In arrangements where one direction of rails has only a single track, the grid cell may extend a full rail-width on those sides.

The container handling vehicle may comprise a cantilever portion, and the first and second wheels may be arranged below the cantilever portion.

The container handling vehicle may comprise:
- a first bracket which extends from the vehicle body, in the first direction into the neighboring grid cell, for supporting the first wheel in an extended position, and
- a second bracket which extends from the vehicle body, in the first direction into the neighboring grid cell, for supporting the second wheel in an extended position.

The first and second wheels may be arranged at distal ends of the respective first and second brackets.

The first and second brackets may be of such thickness that they do not restrict vertical movement of storage containers in the neighboring grid cell. Thus, the first and second brackets are preferably directly above or just inside innermost tracks running in the first direction X in the neighboring grid cell.

It is described a wheel assembly for a container handling vehicle, the wheel assembly comprises:
- a bracket having a connecting end connectable to a vehicle body of a container handling vehicle, wherein the bracket comprises a central web that extends with a surface flush with a side of the container handling vehicle, the central web supporting a wheel and a gear wheel;
- the wheel being rotatable around a wheel axis and comprises a toothed circular surface arranged radially inwards of a wheel rim of the wheel;
- a gear wheel being rotatable around a gear wheel axis and engaged to the toothed circular surface of the wheel via a toothed outer surface;
wherein the wheel axis and the gear wheel axis are arranged parallel and offset relative to each other.

The axle portion may form the wheel axis.

The gear wheel may comprise a pulley for rotation by a drive belt.

The pulley may be arranged opposite the toothed outer surface.

The wheel assembly may comprise a wheel motor and a drive belt, wherein the drive belt may be configured to drive the gear wheel by rotation of the wheel motor.

The container handling vehicle may comprise a cantilever portion, and the wheel assemblies may be arranged on opposite sides of the container handling vehicle and wherein the wheels of the wheel assemblies may be arranged below the cantilever portion.

It is also described a method of driving a wheel motor for operating a wheel assembly as defined above for moving a container handling vehicle in a first direction, the wheel motor driving a drive belt, the drive belt being in engagement with the gear wheel of the wheel assembly, and wherein, upon rotation of the wheel motor the gear wheel rotates around the gear wheel axis and the wheel rotates around the wheel axis thereby moving the container handling vehicle in the first direction.

The automated storage and retrieval system may comprise a plurality of upright members and each storage column may be defined by four of the upright members.

The solution described above provides a more stable container handling vehicle when travelling in at least one direction in that at least two of the wheels, i.e. the wheels on sides where the cantilever extends from, are moved at least partly into the tracks of a neighboring grid cell.

In the present specification the term "storage container" is intended to mean any goods holder unit having a bottom and side portions suitable for releasable connection to the container handling vehicle's lifting device, and may be in the form of, for example, a bin, a tote, a tray or similar. The side portions may preferably comprise gripping recesses. The side portions are preferably sidewalls. The height of the sidewalls may vary depending on the intended use of the automated storage and retrieval system and the goods to be stored. Gripping recesses may be arranged at an upper rim of the sidewalls. The outer horizontal periphery of the storage container is preferably rectangular.

The relative terms "upper", "lower", "below", "above", "higher" etc. shall be understood in their normal sense and as seen in a cartesian coordinate system.

The invention may be used in connection with storage containers and systems as described above. However, other areas where the disclosed automated storage and retrieval system and methods may be used is within vertical farming, micro-fulfilment or grocery/e-grocery.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a frame structure of a prior art automated storage and retrieval system;
Fig. 2 is a perspective view of a prior art container handling vehicle having an internally arranged cavity for carrying storage containers therein;
Fig. 3A is a perspective view of a prior art container handling vehicle having a cantilever, with a lifting device suspended therefrom, for carrying storage containers underneath;
Fig. 3B is a side view of the prior art container handling vehicle of Fig. 3A with the lifting device in a docked position;
Fig. 3C is a side view of the prior art container handling vehicle of Figs. 3A and 3B with the lifting device in a position below the wheels of the vehicle;
Fig. 4 is a perspective view, seen from below, of a prior art container handling vehicle having an internally arranged cavity for carrying storage containers therein;
Fig. 5 is a perspective view of the container handling vehicle in Fig. 4 without side and top panels;
Fig. 6A is a side perspective view of a wheel assembly comprising a wheel, a gear wheel, a drive belt and a motor assembly of a prior art container handling vehicle;
Fig. 6B is a front view of Fig. 6A;
Fig. 7A is side perspective view from of an exemplary container handling vehicle according to the invention;
Fig. 7B is a detailed front perspective view of components of the container handling vehicle of Fig. 7A where superfluous covers have been omitted on purpose to better illustrate wheel, gear wheel, drive belt, bracket, wheel motor etc.;
Fig. 7C is an enlarged view of section A in Fig. 7B;
Fig. 7D is a detailed view of Fig. 7C where a part of the vehicle has been removed to better illustrate the drive belt and the wheel motor;
Fig. 7E is a detailed view of Fig. 7D where a bracket to which a gear wheel and wheel are connected has been removed to better illustrate an engagement between the gear wheel and the wheel;
Fig. 7F is a top view of Fig. 7E;
Fig. 7G is a top view of Fig. 7B;
Fig. 7H is a similar view as Fig. 7C with a storage container in the grid cell below the cantilever portion;
Fig. 7I is a cross sectional view of Fig. 7H in a horizontal plane extending through the wheel axis, the gear wheel axis and the motor axis;
Fig. 7J is a side perspective view of Fig. 7I;
Fig. 8 is an alternative configuration of the wheel, gear wheel, drive belt and wheel motor;

### DETAILED DESCRIPTION OF THE INVENTION

In overview, the arrangement described relates to one or more wheel assemblies for a container handling vehicle of an automated storage and retrieval system, each assembly having a wheel and a gear wheel arranged on respective parallel and offset axes. As a result a container handling vehicle, for example a cantilever type container handling vehicle is provided with increased stability. By offsetting the axes, the space within the container may be better used, for example by lowering the centre of gravity by moving the motor location appropriately, additionally or alternatively placing it at a location with more available space, to render use of a larger motor possible. In addition the arrangement permits at least two of the wheels, i.e. the wheels on sides where the cantilever extends from, to be moved at least partly into the tracks of a neighboring grid cell, providing a more stable container handling vehicle.

In the following, embodiments of the invention will be discussed in more detail with reference to the appended drawings. It should be understood, however, that the drawings are not intended to limit the invention to the subject-matter depicted in the drawings.

A frame structure 100 of the automated storage and retrieval system 1 may be constructed in a similar manner to the prior art frame structure 100 described above in connection with Figs. 1. That is, the frame structure 100 may comprise a number of upright members 102, and comprise a first, upper rail system 108 extending in the X direction and Y direction.

The frame structure 100 may comprise storage compartments in the form of storage columns 105 provided between the members 102 wherein storage containers 106 may be stackable in stacks 107 within the storage columns 105.

The frame structure 100 can be of any size. In particular, it is understood that the frame structure can be considerably wider and/or longer and/or deeper than disclosed in Fig. 1. For example, the frame structure 100 may have a horizontal extent of more than 700×700 columns and a storage depth of more than twelve containers.

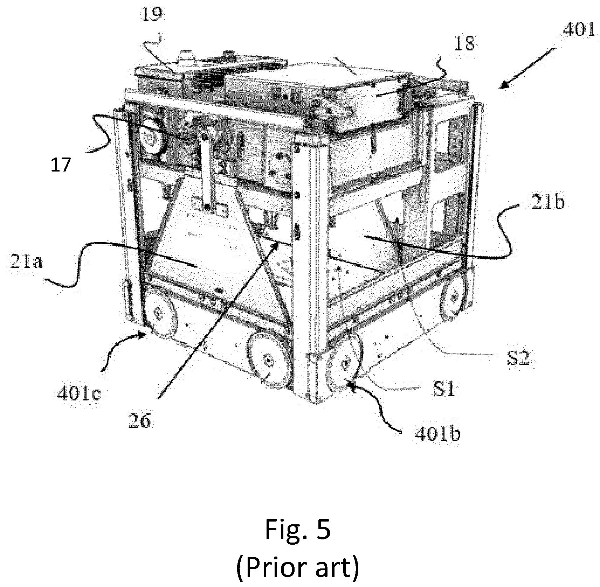

The prior art container handling vehicles comprising a cavity for accommodating a storage container, see figs. 2, 4 and 5, have certain advantageous features. In particular, the guidance/support provided to a storage container when accommodated in the cavity entails that the vehicles may have increased acceleration/retardation relative to the cantilevered container handling vehicle 301 shown in figs. 3A-3C. However, the potential increase in acceleration/retardation is not fully realized due to instability of the vehicles. The instability is caused by both vehicles 201,401 having many of the drive, power, control and lifting components arranged above the cavity, providing a high centre of gravity.

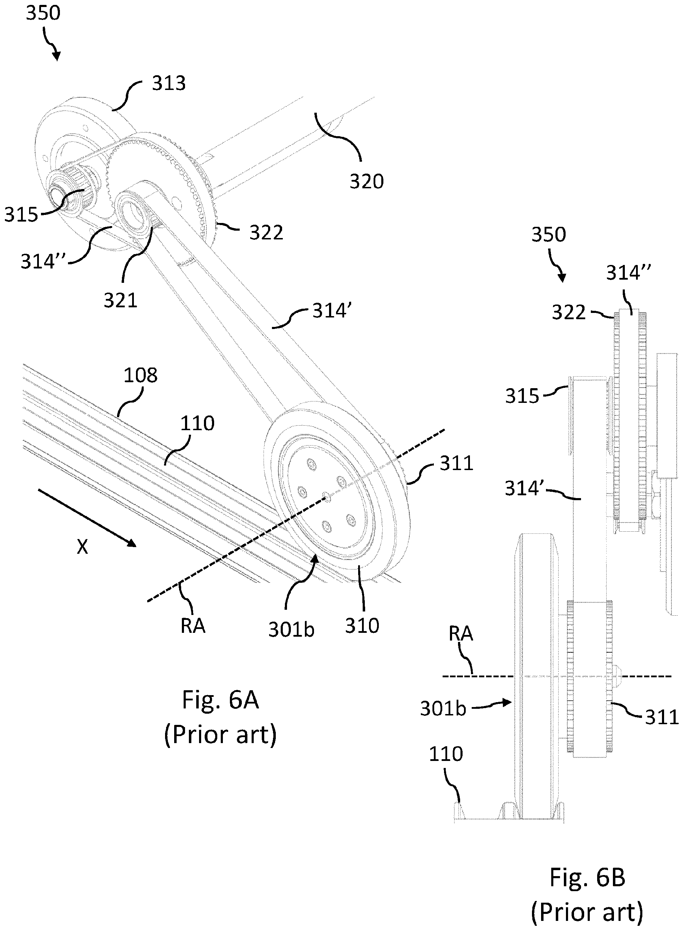

Fig. 6A is a side perspective view of a wheel assembly 350 comprising a wheel, a gear wheel, a drive belt and a motor assembly of prior art container handling vehicle 301. The wheel assembly in Fig. 6A is the one used for the container handling vehicle 301 in Fig. 3A. The wheel assembly 350 features one of the wheels 310 in the first set of wheels 301b. A gear wheel 311 is connected to the wheel 310 and has a common rotational axis RA with the wheel 310. I.e. the gear wheel 311 and the wheel 310 rotate around the same rotational axis RA. A first drive belt 314' is engaged with an outer surface of the gear wheel 311 and an outer surface of a first gear wheel 321 of the drive shaft 320. A second gear wheel 322 is arranged next to the first gear wheel 321. The second gear wheel 322 and the first gear wheel 321 have a common axis of rotation. The second gear wheel 322 has a larger diameter than the first gear wheel 321. A second drive belt 314" is engaged with an outer surface of the second gear wheel 322 of the drive shaft 320 and a motor gear wheel 314.

The drive shaft 320 extends across the vehicle body to an opposite side thereof to a similar wheel assembly (not shown) for synchronous operation of another wheel in the first set of wheels.

Fig. 6B is a front view of Fig. 6A.

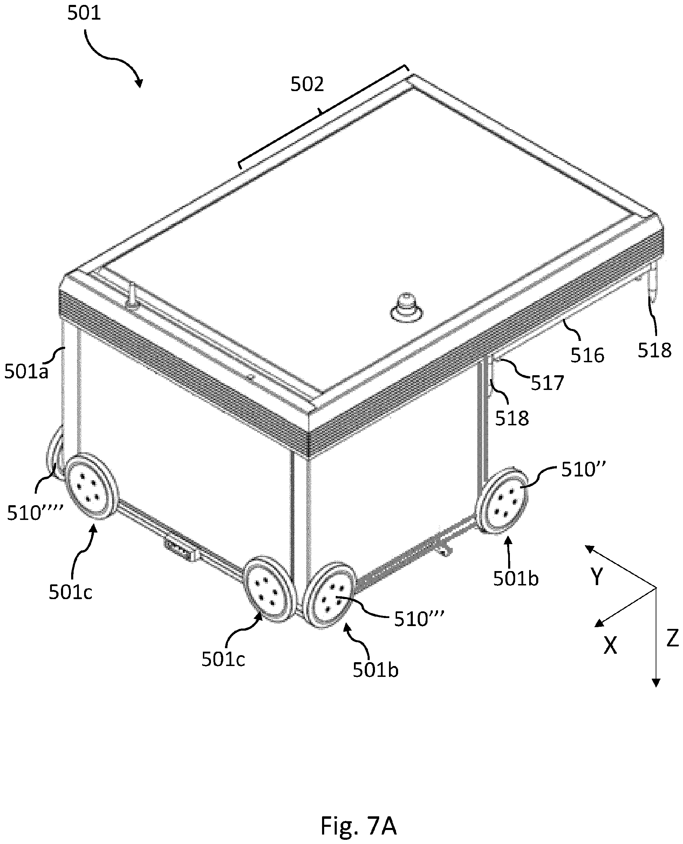

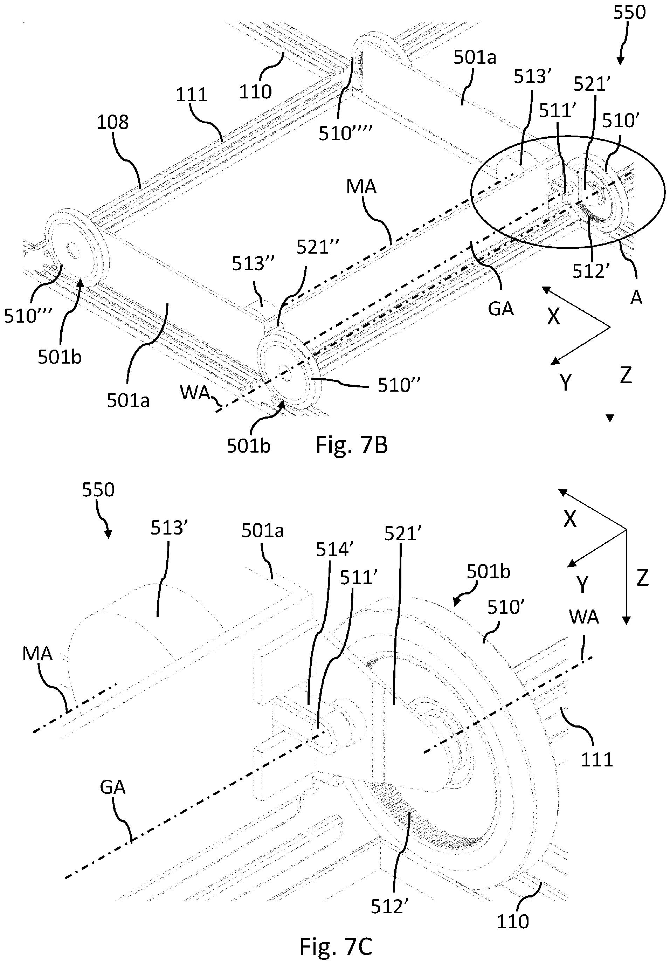

Fig. 7A is side perspective view of an exemplary container handling vehicle 501 according to the invention. The container handling vehicle 501 features a vehicle body 501a. A first set of wheels 501b and a second set of wheels 5010 are connected to the vehicle body 501a. The first set of wheels 501b being configured for driving the container handling vehicle 501 in a first direction X on top of a rail system 108 (rail system not shown in Fig. 7A, see e.g. Fig. 7B).

The container handling vehicle 501 comprises a cantilever portion 502 and a lifting device 515 comprising a lifting frame 516 for lifting storage containers 106. The lifting frame 516 is suspended from a cantilever portion 502. The lifting device 515 comprises one or more grippers 517 which are adapted to engage a storage container 106. The lifting frame 516 and grippers 517 can be lowered from the cantilever portion 502 of the vehicle 501 so that the position of the grippers 517 with respect to the vehicle 501 can be adjusted in a third direction Z which is orthogonal to the first direction X and the second direction Y. The grippers 517 preferably engage the storage containers 106 from above.

Preferably guide pins or guide members 518 assist in aligning the grippers 517 relative gripping recesses (not shown) of the storage container 106 as well as in aligning the lifting frame 516 relative upright members 102 of the frame structure 100 (see Fig. 1).

Some of the wheels, i.e. a second wheel 510", a third wheel 510‴ and a fourth wheel 510ʺʺ in the first set of wheels 501b, as well as two of the wheels in the second set of wheels 5010 are shown in Fig. 7A.

Fig. 7B is a detailed front perspective view of components of the container handling vehicle 501 of Fig. 7A where superfluous covers have been omitted on purpose to better illustrate wheel 510',510", gear wheel 511', drive belt 514', bracket 521',521", wheel motor 513',513" etc.

Fig. 7C is an enlarged view of section A in Fig. 7B.

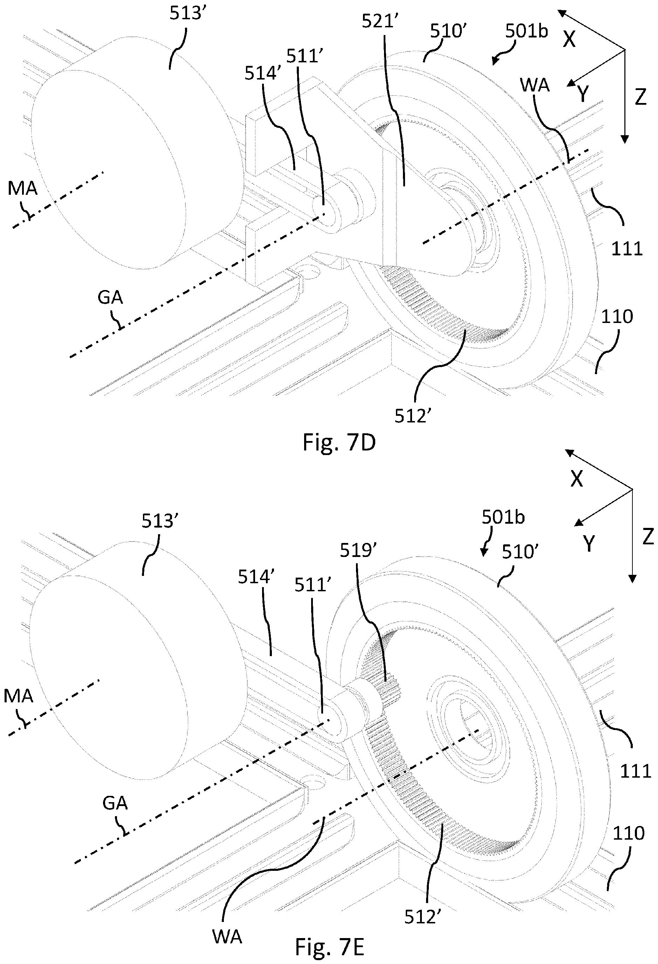

Fig. 7D is a detailed view of Fig. 7C where a part of the vehicle has been removed to better illustrate the drive belt 514' and the wheel motor 513'.

Fig. 7E is a detailed view of Fig. 7D where a bracket 521' to which a gear wheel 511' and wheel 510' are connected has been removed to better illustrate an engagement between the gear wheel 511' and the wheel 510'.

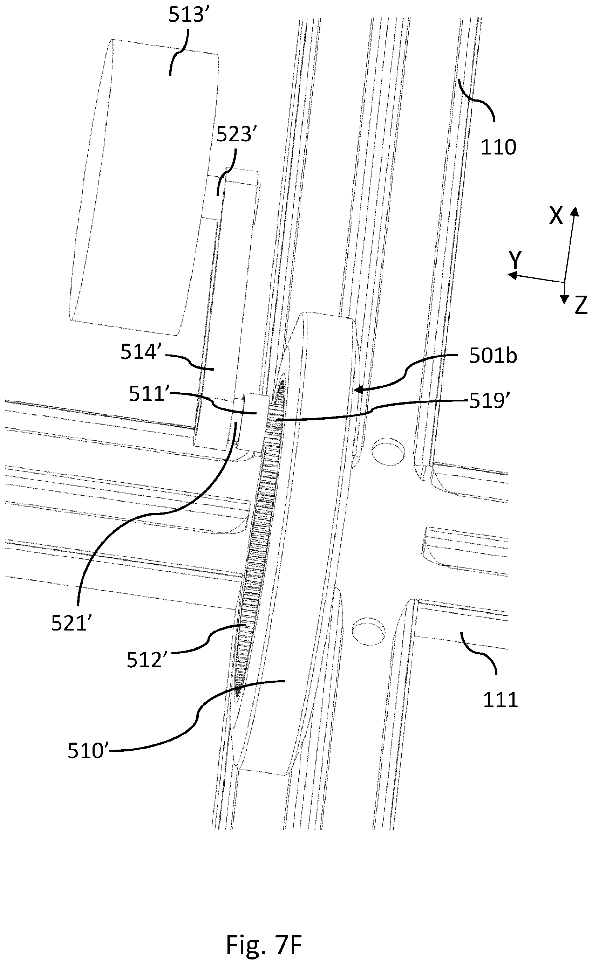

Fig. 7F is a top view of Fig. 7E.

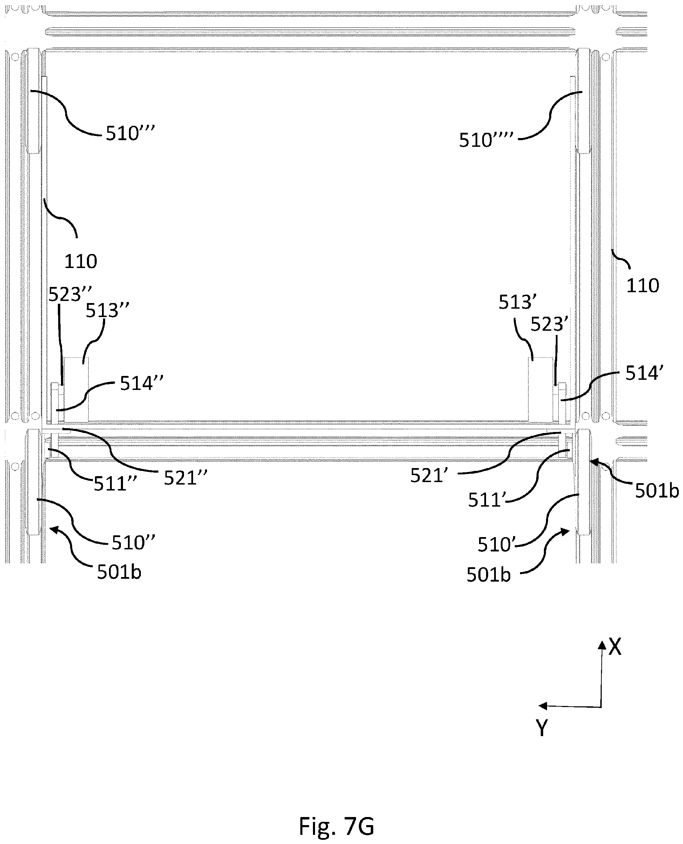

Fig. 7G is a top view of Fig. 7B.

Referring to Figs. 7B-7G, all of the wheels in the first set of wheels 501b are shown. The first set of wheels 501b features a first wheel 510' and a second wheel 510" arranged for engagement with two neighboring tracks of the first set of parallel rails 110 in the first direction X of the rail system 108. Thus, the first wheel 510' and the second wheel 510" are arranged on opposite sides of the vehicle body 501a and are rotatable around a common wheel axis WA. The first set of wheels 501b further features a third wheel 510‴ arranged at the same side of the vehicle as the second wheel 510" for engaging the same track, and a fourth wheel 510ʺʺ arranged at the same side as the first wheel 510' for engaging the same track.

The first wheel 510' comprises a toothed circumferential surface 512' arranged radially inwards of a wheel rim of the first wheel 510'. In Figs. 7B-7J, the surface 512' is arranged on an inner surface of the wheel rim pointing inwards towards the wheel axis WA.

The container handling vehicle 501 also features a first gear wheel 511' engaging the toothed surface 512' of the first wheel 510' via a first portion of the gear wheel 511' having a toothed outer surface 519'. The first gear wheel 511' is rotatable around a gear wheel axis GA.

As shown in the Figure, the wheel axis WA and the gear wheel axis GA are arranged parallel and offset relative to each other.

The first wheel 510' is connected to a bracket 521'. The bracket 521' having a connecting end connectable to the vehicle body 501a and comprises a central web that extends with a surface flush with a side of the container handling vehicle 501. The central web supporting the first wheel 510' and a gear wheel 511'.

The gear wheel 511' comprises second portion having a pulley 522',522" for engagement with the first drive belt 514'. The pulley 522',522" is arranged on an opposite end of the gear wheel 511',511" relative the toothed outer surface 519',519" which is in contact with the circular surface 512',512" of the wheel 510',510". The pulley 522',522" is arranged outside of the wheel rim, thus the pulley 522' is not radially inwards of the wheel rim of the first wheel 510'.

The first drive belt 514' connects an output shaft 523' of the first wheel motor 513' and the pulley 522' and is configured to drive the first gear wheel 511' by rotation of the first wheel motor 513'. The output shaft 523' rotates around a motor axis MA. The motor axis MA is parallel to the wheel axis WA and the gear wheel axis GA.

Similarly, a second drive belt 514" connects an output shaft 523" of the second wheel motor 513" and the pulley 522' and is configured to drive the second gear wheel 511" by rotation of the second wheel motor 513".

The first wheel 510', the first gear wheel 511', the first drive belt 514', the first bracket 521' and the first wheel motor 513' form part of a first wheel assembly 550'.

Similarly, a second wheel 510", a second gear wheel 511", a second drive belt 514", a second bracket 521" and a second wheel motor 513" form part of a second wheel assembly 550".

It shall be noted that the second set of wheels 5010 has been omitted from Figs. 7B-7J on purpose in order to better illustrate the other components. Furthermore, although not disclosed in Figs. 7B-7J, the container handling vehicle 501 also features a wheel lift mechanism for lifting the first set of wheels 501b and/or the second set of wheels 501c to change which of the first and second sets of wheels 501b,501c is in contact with the rail system 108 at any given time.

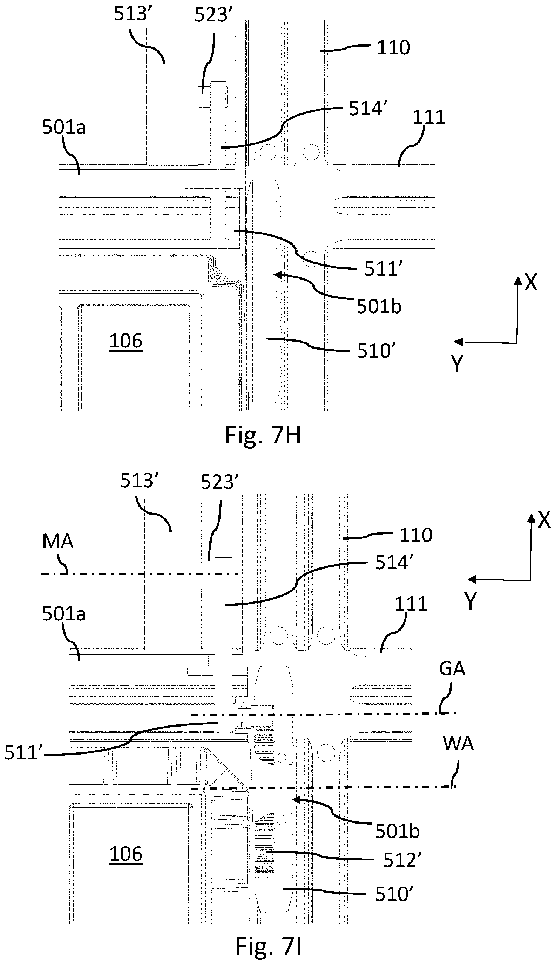

Fig. 7H is a similar view as Fig. 7C with a storage container 106 in the grid cell below the cantilever portion 502.

Fig. 7I is a cross sectional view of Fig. 7H in a horizontal plane extending through the wheel axis WA, the gear wheel axis GA and the motor axis MA.

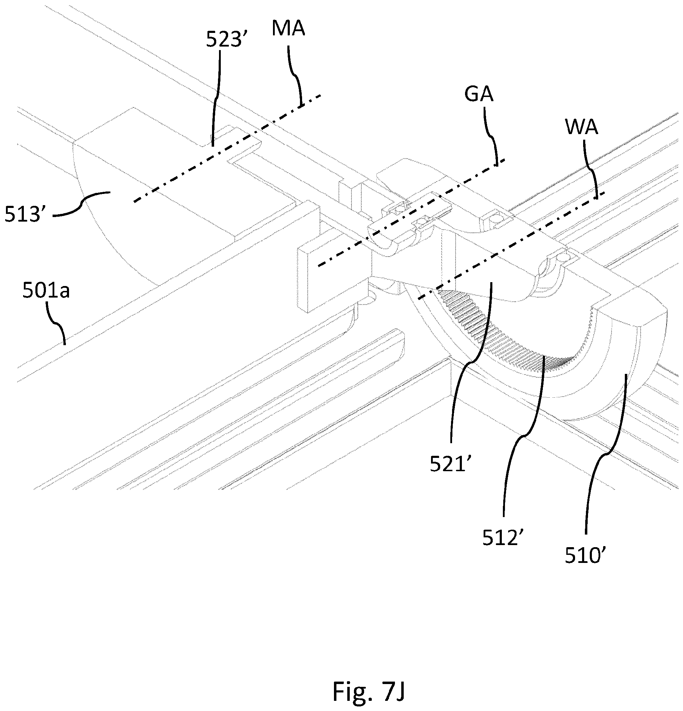

Fig. 7J is a side perspective view of Fig. 7I.

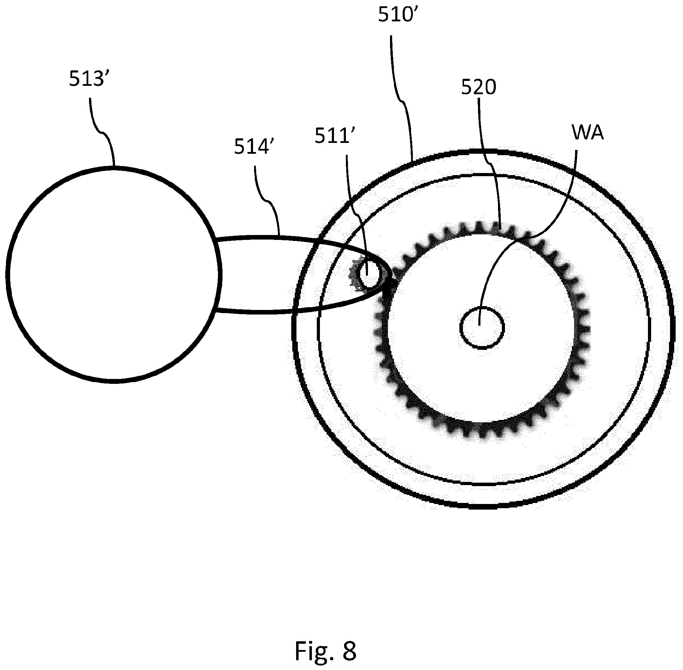

Fig. 8 is an alternative configuration of the wheel 510', the gear wheel 511', drive belt 514' and wheel motor 513'.

In Fig. 8, the toothed circular surface 512' is arranged on an outer circumferential surface of a sprocket wheel 520 pointing outwards away from the wheel axis WA.

The sprocket wheel 520 is concentrically arranged around the wheel axis WA such that the sprocket wheel 520 rotates around the same wheel axis WA as the first wheel 510'.

A similar arrangement may be provided for the second wheel 510" and second gear wheel 511".

In the preceding description, various aspects of the independent claims have been described. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention as defined in the attached claims.

Examples of the present disclosure are set out in the following numbered clauses.
1. A container handling vehicle (501) for operation on a rail system (108) of a storage and retrieval system (1), wherein the container handling vehicle (501) comprises:
   - a vehicle body (501a);
   - at least one set of wheels (501b) connected to the vehicle body (501a), the at least one set of wheels (501b) being configured for driving the container handling vehicle (501) in a first direction (X) on top of the rail system (108);
   - the at least one set of wheels (501b) comprising a first wheel (510') and a second wheel (510"), the first wheel (510') and the second wheel (510") being arranged on opposite sides of the vehicle body (501a) and rotatable around a common wheel axis (WA);
   - the first wheel (510') comprises a toothed circular surface (512',520) arranged radially inwards of a wheel rim of the first wheel (510');
   - a first gear wheel (511') engaging the toothed circular surface of the first wheel (510'), wherein the first gear wheel (511') is rotatable around a gear wheel axis (GA);
   wherein the wheel axis (WA) and the gear wheel axis (GA) are arranged parallel and offset relative to each other.
2. The container handling vehicle according to clause 1, wherein
   - the second wheel (510") comprises a toothed circular surface arranged radially inwards of a wheel rim of the second wheel (510");
   - a second gear wheel (511") engaging the second wheel (510"), wherein the second gear wheel (511") is rotatable around the gear wheel axis (GA).
3. The container handling vehicle (501) according to clause 1, wherein the toothed surface is an inner circumferential surface (512') of the first wheel (510').
4. The container handling vehicle (501) according to clause 1 or 2, wherein the toothed surface is an outer circumferential surface of a sprocket wheel (520) arranged around the wheel axis (WA).
5. The container handling vehicle (501) according to any of the preceding clauses, wherein the container handling vehicle (501) comprises:
   - a first wheel motor (513') and a first drive belt (514'), wherein the first drive belt (514') is configured to drive the first gear wheel (511') by rotation of the first wheel motor (513').
6. The container handling vehicle (501) according to clause 5, wherein the container handling vehicle (501) comprises:
   - a second wheel motor (513") and a second drive belt (514"), wherein the second drive belt (514") is configured to drive the second gear wheel (511") by rotation of the second wheel motor (513").
7. The container handling vehicle (501) according to clause 6, wherein the first and second wheel motors (513',513") have a common motor rotational axis (MA), and wherein the motor rotational axis (MA) is arranged parallel and offset relative to the wheel axis (WA) and the gear wheel axis (GA).
8. The container handling vehicle (501) according to clause 7, wherein the motor rotational axis (MA) is arranged inside the vehicle body (501a).
9. The container handling vehicle (501) according to any of the preceding clauses, wherein the container handling vehicle (501) comprises:
   - a first bracket (521'), extending outwardly from a side of the vehicle body (501a) in the first direction (X), for supporting the first wheel (510') in a position where the wheel axis is spaced from the vehicle body (501a), and
   - a second bracket (521"), extending outwardly from an opposite side of the vehicle body (501a) in the first direction (X), for supporting the second wheel (510") in a position where the wheel axis is spaced from the vehicle body (501a).
10. The container handling vehicle (501) according to any of the preceding clauses, wherein the vehicle body (501a) comprises a cantilever portion (502).
11. The container handling vehicle (501) according to clause 10, wherein the container handling vehicle (501) comprises a lifting device (515) comprising a lifting frame (516) for lifting storage containers (106) suspended from the cantilever portion (502).
12. The container handling vehicle (501) according to clause 11, wherein the lifting device (515) comprises one or more grippers (517) which are adapted to engage a storage container (106).
13. An automated storage and retrieval system (1) comprising a container handling vehicle (501) according to any of the preceding clauses 1-12, and wherein the automated storage and retrieval system (1) comprises:
   - a storage grid with a rail system (108), the rail system (108) comprising a first set of parallel rails (110) arranged to guide movement of vehicles in the first direction (X), and a second set of parallel rails (111) arranged perpendicular to the first set of rails (110) to guide movement of the vehicles in a second direction (Y) which is perpendicular to the first direction (X), the first and second sets of parallel rails (110,111) forming a grid which divides the rail system (108) into a plurality of grid cells (130); and wherein the container handling vehicle (501) operates on the rail system (108), wherein the first and second wheels (510',510") extends from opposite sides of the vehicle body (501a) into a neighboring grid cell (130).
14. The automated storage and retrieval system (1) according to clause 13, wherein the container handling vehicle (501) comprises a cantilever portion (502), and wherein the first and second wheels are arranged below the cantilever portion (502).
15. The automated storage and retrieval system (1) according to clause 13 or 14, wherein the container handling vehicle comprises:
   - a first bracket (521'), extending from the vehicle body (501a), in the first direction (X) into the neighboring grid cell (130), for supporting the first wheel (510') in an extended position, and
   - a second bracket (521"), extending from the vehicle body (501a), in the first direction (X) into the neighboring grid cell (130), for supporting the second wheel (510") in an extended position.
16. A wheel assembly (550',550") for a container handling vehicle (501), the wheel assembly (550',550") comprises:
   - a bracket (521',521") having a connecting end connectable to a vehicle body (501a) of a container handling vehicle (501), wherein the bracket comprises a central web that extends with a surface flush with a side of the container handling vehicle (501), the central web supporting a wheel (510',510") and a gear wheel (511',511"),
   - the wheel (510',510") being rotatable around a wheel axis (WA) and comprises a toothed circular surface arranged radially inwards of a wheel rim of the wheel (510',510"),
   - a gear wheel (511',511") being rotatable around a gear wheel axis (GA) and engaged to the toothed circular surface (512) of the wheel (510',510") via a toothed outer surface (519',519");
   wherein the wheel axis (WA) and the gear wheel axis (GA) are arranged parallel and offset relative to each other.
17. The wheel assembly (550',550") according to clause 16, wherein the gear wheel (511',511") comprises a pulley (522',522") for rotation by a drive belt (514',514").
18. The wheel assembly (550',550") according to clause 17, wherein the pulley (522',522") is arranged opposite the toothed outer surface (519',519").
19. The wheel assembly (550',550") according to any one of clauses 16-18, wherein the wheel assembly (550) comprises a wheel motor (513',513") and a drive belt (514',514"), wherein the drive belt (514',514") is configured to drive the gear wheel (511',511") by rotation of the wheel motor (513',513").
20. A container handling vehicle (501) comprising two wheel assemblies according to any one of clauses 16-19, wherein the container handling vehicle (501) comprises a cantilever portion (502), and wherein the wheel assemblies are arranged on opposite sides of the container handling vehicle (501) and wherein the wheels (510',510") of the wheel assemblies are arranged below the cantilever portion (502).
21. A method of driving a wheel motor (513',513") for operating a wheel assembly (550) according to any of clauses 16-19 for moving a container handling vehicle (501) in a first direction (X), the wheel motor (513',513") driving a drive belt (514',514"), the drive belt (514',514") being in engagement with the gear wheel (511',511") of the wheel assembly (550), and wherein, upon rotation of the wheel motor (513',513") the gear wheel (511',511") rotates around the gear wheel axis (GA) and the wheel (510',510") rotates around the wheel axis (WA) thereby moving the container handling vehicle (501) in the first direction (X).

**LIST OF REFERENCE NUMBERS**

| | |
|---|---|
| 1 | Prior art automated storage and retrieval system |
| 100 | Frame structure |
| 102 | Upright member |
| 104 | Storage volume |
| 105 | Storage column |
| 106 | Storage container |
| 106' | Particular position of storage container |
| 107 | Stack |
| 108 | Rail system |
| 110 | First set of parallel rails (in first direction (*X*)) |
| 111 | Second set of parallel rails (in second direction (*Y*)) |
| 112 | Access opening |
| 130 | Grid cell |
| 201 | Prior art container handling vehicle |
| 201a | Vehicle body of the container handling vehicle 201 |
| 201b | Drive means / wheel arrangement / first set of wheels in first direction (*X*) |
| 201c | Drive means / wheel arrangement / second set of wheels in second direction (*Y*) |
| 301 | Prior art cantilever container handling vehicle |
| 301a | Vehicle body of the container handling vehicle 301 |
| 301b | Drive means / first set of wheels in first direction (*X*) |
| 301c | Drive means / second set of wheels in second direction (*Y*) |
| 310 | Wheel of container handling vehicle 301 |
| 311 | Gear wheel of container handling vehicle 301 |
| 313 | Wheel motor of container handling vehicle 301 |
| 314' | First drive belt of container handling vehicle 301 |
| 314" | Second drive belt of container handling vehicle 301 |
| 315 | Motor gear wheel |
| 316 | |
| 320 | Drive shaft of container handling vehicle 301 |
| 321 | First gear wheel of drive shaft |
| 322 | Second gear wheel of drive shaft |
| 350 | Wheel assembly of container handling vehicle 301 |
| 401 | Prior art container handling vehicle |
| 401a | Vehicle body of the container handling vehicle 401 |
| 401b | Drive means / first set of wheels in first direction (*X*) |
| 401c | Drive means / second set of wheels in second direction (*Y*) |
| 404 | Gripping device |
| 404a | Lifting band |
| 404b | Gripper |
| 404c | Guide pin |
| 404d | Lifting frame |
| 500 | Control system |
| 501 | Container handling vehicle |
| 501a | Vehicle body of the container handling vehicle 501 |
| 501b | Drive means / first set of wheels in first direction (*X*) |
| 501C | Drive means / second set of wheels in second direction (*Y*) |
| 502 | Cantilever portion |
| 510' | First wheel of first set of wheels |
| 510" | Second wheel of first set of wheels |
| 510‴ | Third wheel of first set of wheels |
| 510ʺʺ | Fourth wheel of first set of wheels |
| 511' | First gear wheel |
| 511" | Second gear wheel |
| 512' | Circular surface of first wheel |
| 512" | Circular surface of second wheel |
| 513' | First wheel motor |
| 513" | Second wheel motor |
| 514' | First drive belt |
| 514" | Second drive belt |
| 515 | Lifting device |
| 516 | Lifting frame |
| 517 | Gripper / gripping device / engaging device |
| 518 | Guide member |
| 519' | Toothed outer surface of first gear wheel |
| 519" | Toothed outer surface of second gear wheel |
| 520 | Sprocket wheel around wheel axis |
| 521' | First bracket |
| 521" | Second bracket |
| 522' | Pulley of first gear wheel |
| 522" | Pulley of second gear wheel |
| 523' | Output shaft of first wheel motor |
| 523" | Output shaft of second wheel motor |
| 550' | First wheel assembly |
| 550" | Second wheel assembly |
| | |
| WA | Wheel axis |
| GA | Gear wheel axis |
| MA | Motor axis |
| RA | Rotational axis |
| | |
| X | First direction |
| Y | Second direction |
| Z | Third direction |

## Claims

1. A wheel assembly (550',550") for a container handling vehicle (501), the wheel assembly (550',550") comprising:
- a wheel (510',510") and a gear wheel (511',511"),
- the wheel (510',510") being rotatable around a wheel axis (WA) and comprising a toothed circular surface arranged radially inwards of a wheel rim of the wheel (510',510"),
- the gear wheel (511',511") being rotatable around a gear wheel axis (GA) and engaged to the toothed circular surface (512) of the wheel (510',510") via a toothed outer surface (519',519");
wherein the wheel axis (WA) and the gear wheel axis (GA) are arranged parallel and offset relative to each other.

2. The wheel assembly (550',550") according to claim 1 further comprising
- a bracket (521',521") having a connecting end connectable to a vehicle body (501a) of a container handling vehicle (501), wherein the bracket optionally comprises a central web that extends with a surface flush with a side of the container handling vehicle (501), the central web supporting the wheel (510',510") and the gear wheel (511',511"), optionally wherein the gear wheel (511',511") comprises a pulley (522',522") for rotation by a drive belt (514',514"), and preferably wherein the pulley (522',522") is arranged opposite the toothed outer surface (519',519").

3. The wheel assembly (550',550") according to any one of claims 1 or 2, wherein the wheel assembly (550) comprises a wheel motor (513',513") and a drive belt (514',514"), wherein the drive belt (514',514") is configured to drive the gear wheel (511',511") by rotation of the wheel motor (513',513").

4. The wheel assembly (550',550") according to any preceding claim, wherein the toothed surface is an inner circumferential surface (512') of the first wheel (510') or wherein the toothed surface is an outer circumferential surface of a sprocket wheel (520) arranged around the wheel axis (WA).

5. A container handling vehicle (501) for operation on a rail system (108) of a storage and retrieval system (1), wherein the container handling vehicle (501) comprises:
- a vehicle body (501a); and at least one wheel assembly according to any preceding claim.

6. The container handling vehicle of claim 5, the wheels (501b) being configured for driving the container handling vehicle (501) in a first direction (X) on top of the rail system (108);
- the wheels (501b) comprising a first wheel (510') and a second wheel (510"), the first wheel (510') and the second wheel (510") being arranged on opposite sides of the vehicle body (501a) and rotatable around a common wheel axis (WA), optionally wherein:
- the second wheel (510") comprises a toothed circular surface arranged radially inwards of a wheel rim of the second wheel (510");
- a second gear wheel (511") engages the second wheel (510"), wherein the second gear wheel (511") is rotatable around the gear wheel axis (GA).

7. The container handling vehicle (501) according to claim 6, wherein the container handling vehicle (501) comprises:
- a first wheel motor (513') and a first drive belt (514'), wherein the first drive belt (514') is configured to drive the first gear wheel (511') by rotation of the first wheel motor (513'), optionally wherein the container handling vehicle (501) comprises:
- a second wheel motor (513") and a second drive belt (514"), wherein the second drive belt (514") is configured to drive the second gear wheel (511") by rotation of the second wheel motor (513") optionally wherein the first and second wheel motors (513',513") have a common motor rotational axis (MA), and wherein the motor rotational axis (MA) is arranged parallel and offset relative to the wheel axis (WA) and the gear wheel axis (GA), optionally wherein the motor rotational axis (MA) is arranged inside the vehicle body (501a).

8. The container handling vehicle (501) according to any of claims 5-7, wherein the container handling vehicle (501) comprises:
- a first bracket (521'), extending outwardly from a side of the vehicle body (501a) in the first direction (X), for supporting the first wheel (510') in a position where the wheel axis is spaced from the vehicle body (501a), and
- a second bracket (521"), extending outwardly from an opposite side of the vehicle body (501a) in the first direction (X), for supporting the second wheel (510") in a position where the wheel axis is spaced from the vehicle body (501a), optionally wherein the vehicle body (501a) comprises a cantilever portion (502), optionally wherein the container handling vehicle (501) comprises a lifting device (515) comprising a lifting frame (516) for lifting storage containers (106) suspended from the cantilever portion (502), optionally wherein the lifting device (515) comprises one or more grippers (517) which are adapted to engage a storage container (106).

9. A container handling vehicle (501) comprising two wheel assemblies according to any one of claims 1-4, wherein the container handling vehicle (501) comprises a cantilever portion (502), and wherein the wheel assemblies are arranged on opposite sides of the container handling vehicle (501) and wherein the wheels (510',510") of the wheel assemblies are arranged below the cantilever portion (502).

10. An automated storage and retrieval system (1) comprising a container handling vehicle (501) according to any of claims 5-9, and wherein the automated storage and retrieval system (1) comprises:
- a storage grid with a rail system (108), the rail system (108) comprising a first set of parallel rails (110) arranged to guide movement of vehicles in the first direction (X), and a second set of parallel rails (111) arranged perpendicular to the first set of rails (110) to guide movement of the vehicles in a second direction (Y) which is perpendicular to the first direction (X), the first and second sets of parallel rails (110,111) forming a grid which divides the rail system (108) into a plurality of grid cells (130); and optionally wherein the container handling vehicle (501) operates on the rail system (108), wherein the first and second wheels (510',510") extends from opposite sides of the vehicle body (501a) into a neighboring grid cell (130).

11. The automated storage and retrieval system (1) according to claim 10, wherein the container handling vehicle (501) comprises a cantilever portion (502), and wherein the first and second wheels are arranged below the cantilever portion (502).

12. The automated storage and retrieval system (1) according to claim 10 or 11, wherein the container handling vehicle comprises:
- a first bracket (521'), extending from the vehicle body (501a), in the first direction (X) into the neighboring grid cell (130), for supporting the first wheel (510') in an extended position, and
- a second bracket (521"), extending from the vehicle body (501a), in the first direction (X) into the neighboring grid cell (130), for supporting the second wheel (510") in an extended position.

13. A method of driving a wheel motor (513',513") for operating a wheel assembly (550) according to any of claims 1-5 for moving a container handling vehicle (501) in a first direction (X), the wheel motor (513',513") driving a drive belt (514',514"), the drive belt (514',514") being in engagement with the gear wheel (511',511") of the wheel assembly (550), and wherein, upon rotation of the wheel motor (513',513") the gear wheel (511',511") rotates around the gear wheel axis (GA) and the wheel (510',510") rotates around the wheel axis (WA) thereby moving the container handling vehicle (501) in the first direction (X).
